Europäisches Patentamt

European Patent Office

Office européen des brevets

(11) Publication number: **0 086 020**
**B1**

(12) **EUROPEAN PATENT SPECIFICATION**

(45) Date of publication of patent specification: **21.09.88**

(21) Application number: **83200165.5**

(22) Date of filing: **27.01.83**

(51) Int. Cl.⁴: **A 22 C 17/04**

(54) Boning device and method for boning.

(30) Priority: **08.02.82 NL 8200469**
**19.03.82 NL 8201159**
**02.08.82 NL 8203078**

(43) Date of publication of application:
**17.08.83 Bulletin 83/33**

(45) Publication of the grant of the patent:
**21.09.88 Bulletin 88/38**

(84) Designated Contracting States:
**AT BE CH DE FR GB IT LI LU NL SE**

(56) References cited:
**EP-A-0 070 605**
**US-A-2 897 536**

(73) Proprietor: **LANGEN RESEARCH B.V.**
**Beversestraat 4**
**NL-5431 SH Cuyk (NL)**

(72) Inventor: **Langen, Johannes Christina**
**56, Jan van Cuykstraat**
**NL-5431 GC Cuyk (NL)**
Inventor: **Langen, Christianus Petrus**
**11, Zandkampen**
**NL-5431 BB Cuyk (NL)**

(74) Representative: **Hoorweg, Petrus Nicolaas et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a device for boning pieces of meat, for example shoulder or rib pieces, legs of poultry and the like, said device comprising a frame, a first element having a pressing surface and a counter-element having an opposite pressing surface driving means for moving the first element and the counter-element towards each other and vice versa, and separating means to separate the meat, sinews and the like from the bone.

A device as set forth is known from GB—A—1.582.137.

The invention has for its object to provide a device by means of which boning can be mechanically carried out in a very effective manner without damage to the meat to be separated so that the meat structure remains appropriate for further treatment and/or consumption.

The device embodying the invention is distinguished in that the pressing surface of said first element is bordered by a continuous and protruding severing ridge acting as separating means cooperating with a continuous severing surface of said counter-element, whereas said severing ridge substantially matches the shape of the bone in the piece of meat.

The effective operation of the device is achieved in that the bone is, so to say, punched or cut out of the piece of meat.

In order to enhance the punching or cutting effect the counter-element is made from permanently deformable material. The severing ridge presses a permanent groove in the counter-element so that the shear force exerted on the meat material is raised.

In order to enable effective removal of the meat parts nearest the bone the invention proposes at least one of the elements with a recess, the contour line of which, viewed in the direction of movement, is at a distance on the inner side from the severing ridge, whilst its volume substantially corresponds with that of the bone part. In this way the meat near the bone is pressed beyond the severing ridge, whilst nevertheless the distance between the severing ridge and the contour line ensures that the sinews and skins pressed outwardly remain within the severing ridge.

The invention is furthermore applicable to a device for treating pieces of meat having relatively flat bone parts, for example, shoulder pieces. According to the invention this device is furthermore distinguished in that one or more members are provided for gripping the flat bone part. The piece of meat can then be manipulated.

In one embodiment the severing ridge has essentially the same form as the remaining bone portion and the or each gripping member is displaceable in the direction of movement of the cutting elements. In this device the meat is removed from relatively round bone portions by the cutting elements, whilst previously the gripping member can remove the flat portion from the meat by drawing it out of the piece of meat.

In accordance with the invention, in order to reduce the cyclic time required for boning a piece of meat, two or more gripping members are assembled on a movable carrier to form a processing group having a control for carrying out successive manipulations. In this manner the operator can put the pieces of meat in the gripping member, which then moves it towards the cutting elements, removes a piece of bone, as the case may be, conducts away the removed piece of bone and is subsequently .ready to receive the next piece of meat.

In order to permit of treating similar left- and right-hand pieces of meat of an animal on the same machine, the severing ridge may be constructed so that it has specular shapes so that left- and right-hand bone portions can be dealt with.

The device embodying the invention is further distinguished in that the cavity of the element is filled with a deformable mass.

During the approach of the mould elements said mass will gradually nestle around the bone portion whilst pressing away the meat parts. The deformable mass thus prevents crushing or comminution of the bone portion.

Preferably said mass is formed by one or·more layers of elastic material, for example, rubber. The layers provide an effective deformation of the mass, since they can shift one over the other. According to the invention one or more layers may, if desired, be perforated, which enhances the deformability.

Since a bone portion comprises relatively thin and thick parts near the joints it is furthermore preferred to provide the bottom of one or each cavity with one or more members displaceable in the direction of movement of the mould elements against an elastic force so that matching between the mould cavity and the bone portion is enhanced.

Said members may be formed by a plurality of pins movable parallel to one another.

In a further embodiment said members may have the form of stamps.

In a preferred embodiment said members take support on a diaphragm of a chamber filled with high-pressure fluid. In this way the elastic counter-effort can be kept constant during the entire process.

In order to reduce the deformability of the space around the bone portion in the mould cavity has a stepped inner wall, the step being capable of supporting the elastically deformable mass near the edge.

The deformable mass may furthermore include one or more additional members which cut across sinews or skins at predetermined places before the meat is pressed away. In this way meat residues remaining on the bone portion are reduced by 30%.

According to a further development of the invention the boning device may be provided with centering means for having the bone in the uncut piece of meat in the correct position before the cutting- and counterelements are pressed upon each other. In this way even bones having an irregular shape can be punched out without damaging the bone.

The invention furthermore relates to a method for boning pieces of meat, for example, shoulder or rib pieces, legs of poultry and the like, utilizing a press comprising a first element having a pressing surface and a second element having a second pressing surface, both surfaces substantially matching the shape of the bone in the piece of meat, characterized in that said piece of meat is placed such that its bone is located within the area of said pressing surfaces, the first and second elements are moved to each other, and the meat is severed along the border area of said pressing surfaces by applying a higher pressing force on the border area than the pressing force effectuated by said pressing surfaces.

The invention will be described more fully with reference to the following description of an embodiment.

The drawing shows in:

Fig. 1 a perspective plan view of a boning device in one embodiment of the invention,

Fig. 2 a plan view of a piece of meat to be boned,

Fig. 3 a cross-sectional view taken on the line III—III of the piece of meat of Fig. 2,

Fig. 4 a plan view of cutting element embodying the invention suitable for use in the device shown in Fig. 1,

Fig. 5 a sectional view taken on the line V—V in Fig. 4,

Fig. 6 a sectional view like Fig 5 of the cutting elements filled with a piece of meat to be worked,

Fig. 7 an enlarged sectional view like Fig. 5 of a detail of the cutting edge,

Fig. 8 a vertical sectional view of a mould of a second embodiment,

Fig. 9 a plan view of the lower mould in Fig. 10,

Fig. 10 a plan view of an alternative embodiment of the lower mould,

Fig. 11 a sectional view of an embodiment having an additional cutting member,

Figs. 12 and 13 a perspective view and a side elevation respectively of the cutting member,

Fig. 14 a perspective view of a gripping element embodying the invention.

Fig. 15 a perspective plan view of a further embodiment of the invention including centering means.

Fig. 19 both elevational side views of the embodiment according to Fig. 15, each showing the centering means in a retracted and protruding position of said centering means respectively.

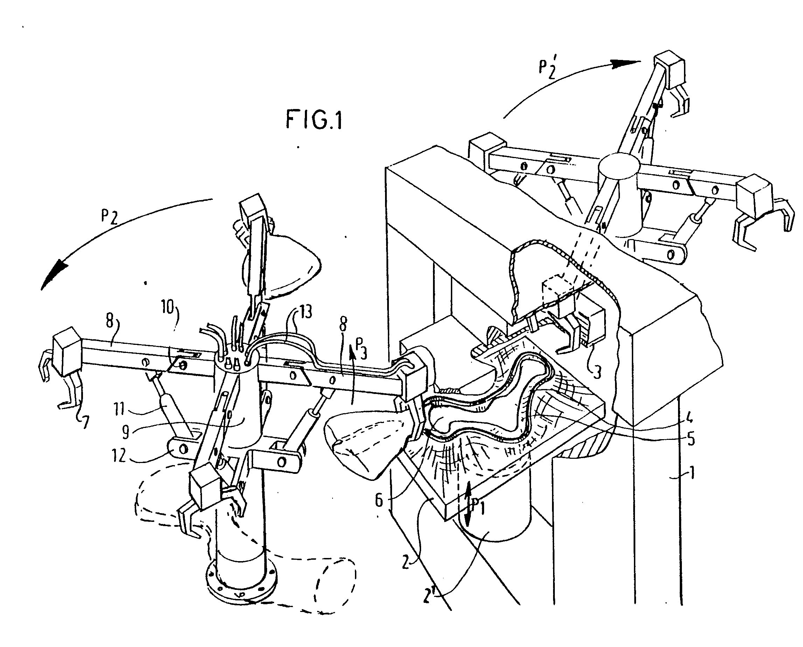

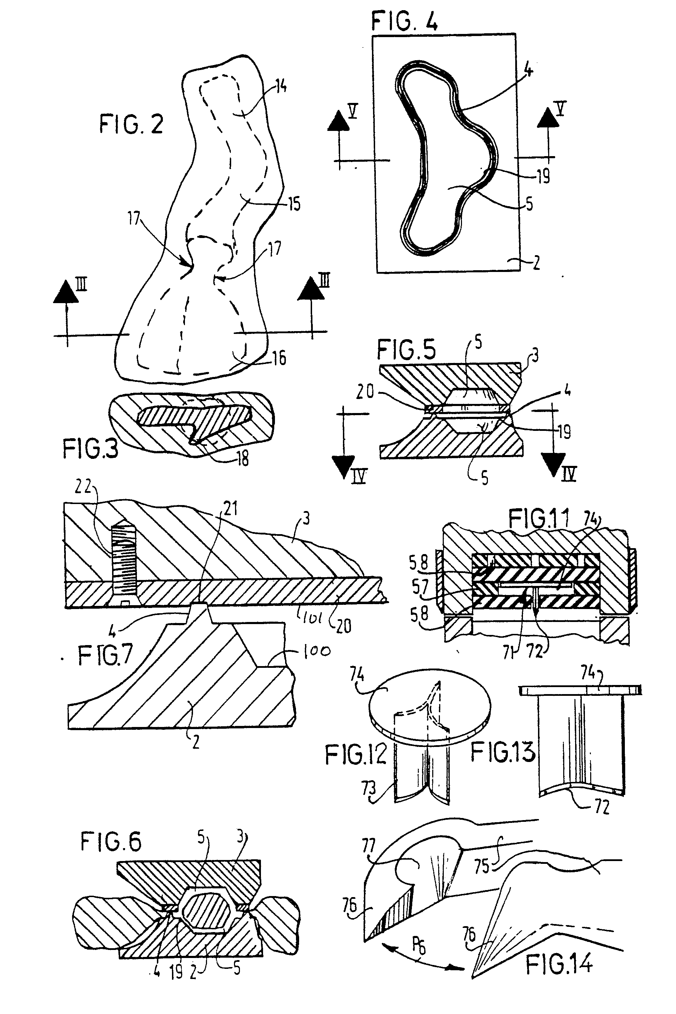

Reference numeral 1 in Fig. 1 designates the frame, which may be constructed in any appropriate manner provided it has adequate strength and rigidity for absorbing the cutting efforts occurring when the pieces of meat are boned.

According the the invention the device is provided with a cutting element 2, which in the embodiment shown takes support on the cylinder 2' so that the cutting element can move up and down in the direction of the arrow P1. The cylinder 2' may be a hydraulic or pneumatic ram or, if desired be replaced by other moving means.

Rigidly secured in the frame 1, above the cutting element 2, is provided a stationary counter-element 3 parts of which are broken away to more clearly show the cutting element 2; the shape essentially corresponds with that of the cutting element 2. The counter-element 3 may be fastened in the frame 1 also in any appropriate manner provided the cutting efforts can be absorbed.

In accordance with one aspect of the invention the cutting element 2 has a severing ridge 4, which will be described in detail with reference to the further figures. The counter-element is provided with a deformable counter-plate, which will also be described in detail hereinafter.

The cutting element 2 furthermore has a recess 5 within the cutting edge 4 for receiving a bone portion schematically designated by 6 in Fig. 1.

The device furthermore comprises gripping members 7, every four of which are united in a group in order to permit of stepwise working successive pieces of meat. Each gripping member 7 is arranged on an arm 8, said arm being fastened to a rotatable, vertical spindle 9. Each arm is furthermore provided with a hinge 10 and the movable, outer part of the arm 8 is coupled with a pressure ram 11, which takes support on a support 12 of the spindle 9. The gripping member 7 comprises two opposing fingers which are hydraulically actuated through ducts 13 in a manner such that each bone portion can be gripped and released respectively.

The device depicted above will be discussed with reference to a piece of meat to be worked, in this case a shoulder piece shown in detail in Figs. 2 and 3. The shoulder piece comprises in this case two relatively pivotable bone portions 14 and 15, the shoulder blade 16 adjoining the free end of the bone portion 15. As compared with the bones 14 and 15 the shoulder blade has a relatively flat shape. Moreover, directly near the bone portion 15 the shoulder blade has a recess 17, which is used in the present device for applying the gripping members 7. The operator of the device shown in Fig. 1 feeds each piece of meat as shown in Fig. 2 to the open gripping member 7 so that the closed gripping member 7 enters the recess 17. The operator may previously have made an incision in the meat on the shoulder blade. Care is taken for the ridge of the blade to point downwards.

By turning the arms 8 around the spindle 9 in the direction of the arrow P2 the piece of meat arrives above the cutting element 2 so that by actuating the ram 2' the meat is cut away from the bone portions, since the severing ridge 4 comes into contact with the counter-element 3, which will be described in further detail hereinafter. The machine is furthermore programmed so that directly before the definite cut of the mass of meat around the bone portions the arm 8 is urged upwards by the ram 11 in the direction of the arrow P3, as a result of which the shoulder blade is torn away from the meat, which does not give rise to problems since the ridge 18 is pointing downwards.

After the mass of meat is completely cut, the undamaged residual meat is collected and removed, after which the bone portion can be removed from the severing ridge 4 by moving the cutting element 2 downwards. By a further turn of the arms 8, the fingers 7 of the gripping member being released, the shoulder blade is conducted away by gravity. In the meantime the other gripping members 7 have received pieces of meat, which are fed one by one to the cutting element 2.

Owing to a symmetrical design of the severing ridge 4 the cutting element 2 can deal with pieces of meat of the left- or right-hand side of the animal, as the case may be. In this manner a corresponding group of gripping members 7 on the other side of the frame 1 can handle symmetrical pieces of meat.

The cutting operation proper will now be described in further detail with reference to Figs. 4 to 7.

Fig. 4 is a plan view of the cutting element 2, in which, however, as an alternative the severing ridge 4 may be suitable for boning a complete piece of meat including a shoulder blade. The circumferential shape of the severing ridge 4 substantially corresponds to the form of the bone in the piece of meat. Inside the severing rige 4 a recess 5 is provided, the contour line 19 of which is located at a given distance from the severing ridge 4 (see also Fig. 5). The counter-element 3 has a similar recess 5 and has furthermore a counter-plate 20 made from a permanently deformable or ductile material, for example, stainless steel. The detail of Fig. 7 illustrates the advantage of this embodiment, that is to say, at the first load between the cutting element 2 and the counter-element 3 the severing ridge 4 presses a permanent groove 21 in the plate 20. The groove and the ridge 4 exert the desired cutting effect on the meat. The plate 20 may be replaceable by means of bolts 22. In this manner a cutting device can be obtained which is cheap and readily repairable.

Fig. 6 clearly shows that when a peice of meat is arranged between the elements 2 and 3 the bone portion is substantially completely embraced by the over-all volume of the recesses 5, there remaining only space for the sinews and films extending along the bone and being initially moved outwards with the meat upon compression, but being left in the space between the contour line 19 and the severing ridge 4. The meat itself outside the severing ridge 4 is cut off in substantially non-deformed shape and collected.

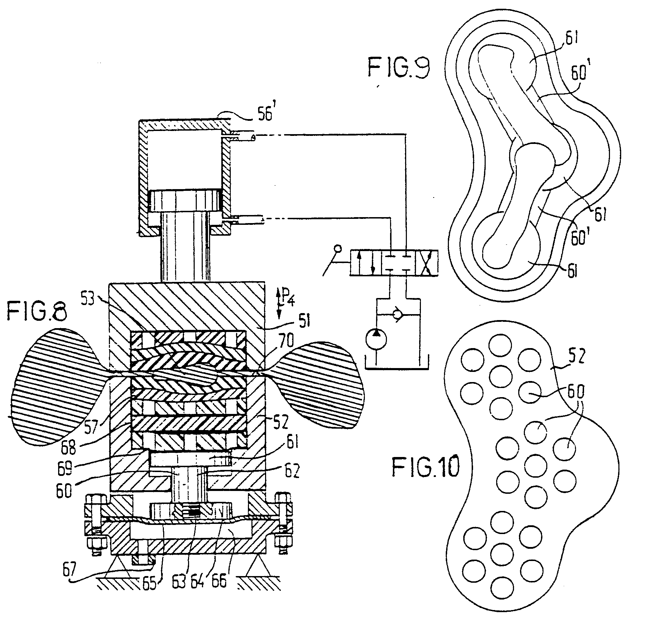

In the embodiment of Fig. 8 the lower mould element is supported in the frame and the upper mould element can be moved up and down in the direction of the arrow P4 by means of the ram 56'.

The cavity in the elements 51, 52 is filled with layers of elastic material and in the bottom of the lower mould element 52 is disposed a member 60, which is movable in the direction of the arrow P4 and which exhibits the shape of a stamp. The member 60 is provided with a circular stamp part 61 fastened to a shaft 62. The lower end of the shaft 62 has a screwthread 63, onto which is screwed a foot part 64. The foot part 64 rests on a diaphragm 65 of a pressure chamber 66, which may be filled with a pressure fluid via the connecting stub 67.

The inner wall 68 of the cavity in the lower mould element 52 has a step at 69; it should be noted that in the unloaded state the top surface of the stamp 61 matches the top surface of the step 69.

The operation of the device shown in Fig. 10 is as follows: but when the meat is pressed away not only the layers 57 are deformed but also the stamp 60 is urged downwards against the effect of the elastic force of the pressure fluid in the pressure chamber 66. Thus a constant counterforce is ensured, whilst sufficient space is left for the bone portion 53 so that damage is minimized. Owing to the step 69 the edge of the layers 57 around the bone portion is less deformable so that the meat is effectively pressed outwards in the gap between the elements 51, 52. The meat is cut off by a severing ridge 70 provided on the lower element 52, co-operating with the lower edge of the upper element 51.

Fig. 9 and 10 show a few embodiments of members 60, adapted to move up and down; Fig. 9 shows three stamp-shaped members, between which filling members 60' in the form of staight strips are arranged. Like the stamp members 61 the filling members are supported on the diaphragm 65. When loaded, these members 60' will, however, be urged away to a lesser extent since the bone is locally thinner.

Fig. 10 shows the bottom of an element 52 provided with pin-shaped members 60, which are slidable in matching recesses in the bottom of the mould element 52 and which rest on the underside on a diaphragm 65 as shown in Fig. 10. In this manner optimum adaption of the mould bottom to the shape of the bone is obtained.

The invention is not limited to the embodiments described in the foregoing. For example, the elastic layers 57 may be replaced by a single, elastic element; it may be imagined to use a bladder filled with a pressure fluid and filling out the cavity of the element 51, 52.

Moreover instead of being formed by fluid supported stamps the yielding members 60 may be formed by spring elements, for example, cup springs capable of producing a substantially constant force along the path of depression.

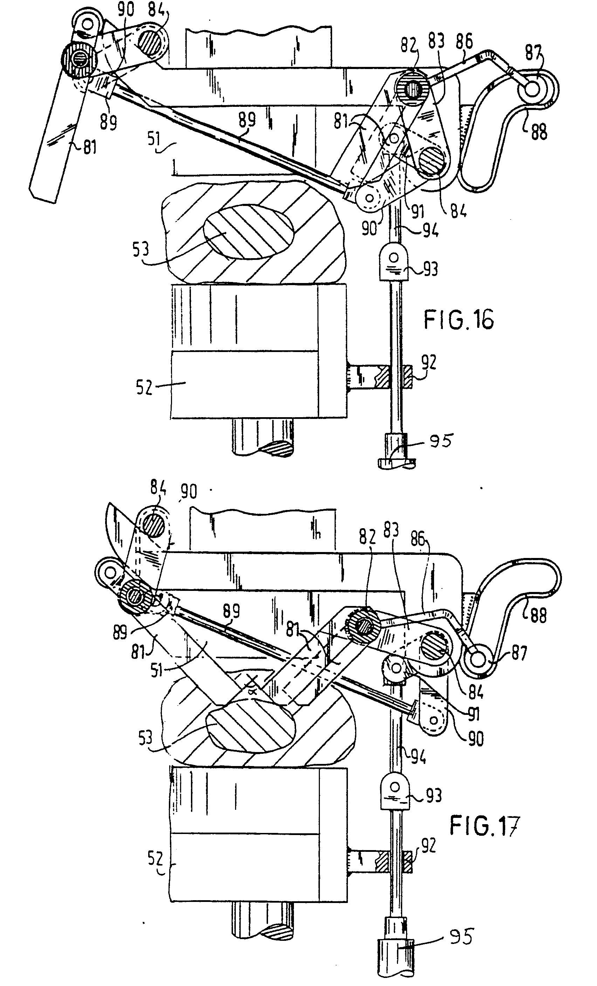

Fig. 11 shows that a cutting member 71 is included in the deformable mass. In the rest position the severing edge will just lie below the deformable mass or it will not do so, but at the approach of the lower and upper elements the severing ridge will cut the subjacent meat, sinews and/or films before the meat is pressed away. The cutting member is preferably formed by a standing strip 73, which has in this case (Fig. 12) the shape of a Y, but obviously it may have any desirable shape. The strip is fastened to a supporting plate 74 arranged between the layers 57 and 58. The cutting edge has a curved shape (see Fig. 15). The number and place of the cutting members 71 are at random.

Fig. 14 shows an embodiment of gripping members 75, which furthermore have a punctiform end 76 to facilitate penetration into the meat. Behind the punctiform end of the left-hand part a recess 77 is provided for readily receiving the bone portion to be gripped. In this way fracture of the bone is avoided, since it can change its direction. The opposing parts 75 of the gripping members can move to and fro in the direction of the arrow P6.

In the embodiment according to Fig. 15, 16 and 17 the cutting device is provided with centering means 80, which has for its object to place the bone in the meat piece exactly in the center line of the mould, for instance according to the position of the bone as showed in Fig. 9.

Said centering means are here formed like arms 81, which are parallel to each other, whereas one end of which is fastened to a rod 82 pivotably arranged in between a pair of levers 83 secured to a driving shaft 84. Said driving shaft is journalled in a frame part 85 secured to the upper mould 51 of the boning device.

The rod 82 is further provided with a bracket 86, the free end of which is provided with a roller 87. The roller is guided in a cam-track 88, part of the frame 85.

At the opposite side of the mould 51 a similar strucuture is provided in order to create a pair of opposite arms 81, the free ends of which are pointed to the lower mould 52.

Those groups of centering arms 81 are movable simultaneously into the space in between the upper and lower mould and are to be protected therefrom. The simultaneous movement is achieved by a linkage 89 pivotably journalled into crank arms 90 on both driving shafts 84 of the opposite centering arms.

One of the shafts 84 is provided with a crank arm 91 to which any suitable driving means can be connected.

The working of the centering means as described hereabove is as follows:

Assuming that the centering arms 81 are being in the first position as showed in Fig. 15 and 17, said arms are protruding into the space between the lower and upper mould 52 and 51 respectively. Assuming further that a piece of meat is placed upon the lower mould 52, the centering arms 81 will be stuck into the piece of meat, so that the end faces of the arms 81 will urge the bone 53 in the correct position with respect to the cavity in the mould. The centering action of the arms 81 will be ameliorated by the particular position of the end faces including a certain angle α with respect to each other.

When raising the lower mould 52 further the pressing action of the arms 81 upon the bone will be heightened too. The pressing action will continue up to the moment when a bracket 92 fastened to the mould 52 will reach a stop member 93 of a driving rod 94, which is fastened to the crank 91 of the driving shaft 84. At that moment any further raising of the lower mould 52 will push the rod 94 upwards and so turn the shaft 84 in clockwise direction as the pair of levers 83 accordingly. The arms 81 will be retracted so, whereas the retracting movement is guided by the roller 87 in the cam-track 88.

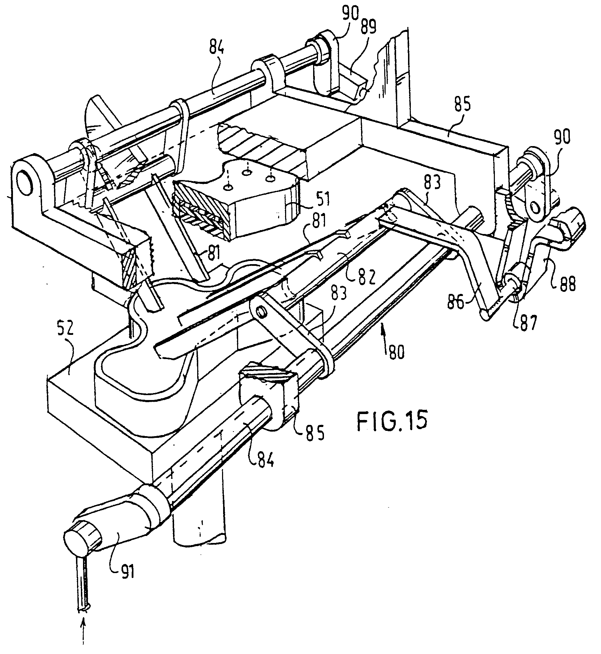

The opposite arms 81 at the left side in Fig. 19 are also retracted, whilst the driving shaft 84 is turned clockwise also by means of the linkage 89.

The arms 81 will be brought in the retracted second position, according to Fig. 16 so the lower mould 52 can reach the upper mould undisturbed by the arms 81.

When removing the pieces of meat and the bone cutted out, another piece of meat may be inserted as soon as the lower mould 52 is again in the position of Fig. 16. Thereupon the rod 94 can be lowered by a suitable driving means, for instance a hydraulic cylinder 95, so bringing the arms 81 into the first position of Fig. 17.

## Claims

1. Device for boning pieces of meat, for example shoulder or rib pieces, legs of poultry and the like, said device comprising a frame (1), a first element (2) having a pressing surface (100) and a counter-element (3) having an opposite pressing surface (101), driving means (2') for moving the first element (2) and the counter-element (3) towards each other and vice versa, and separating means to separate the meat, sinews and the like from the bone, characterized in that the pressing surface (100) of said first element (2) is bordered by a continous and protruding severing ridge (4) acting as the separating means, cooperating with a continuous severing surface (20) of said counter-element (3), whereas said severing ridge (4) substantially matches the shape of the bone in the piece of meat.

2. A device as claimed in claim 1, characterized in that the counter-element (20) is made from a material, for example, stainless steel, being permanently deformable with respect to the severing ridge or being ductile.

3. A device as claimed in claims 1 and 2, characterized in that the counter-element is constructed in the form of a repleaceable plate (20).

4. A device as claimed in claims 1 to 3, characterized in that at least one of the elements has a recess (5) whose contour line (19), viewed in the direction of movement, extends at a distance from and inside the severing ridge (4) and whose volume substantially corresponds with that of the bone portion.

5. A device for processing pieces of meat having relatively flat bone portions such as shoulder and as claimed in any one of the preceding claims 1 to 4 characterized in that one or more members (7) are provided for gripping that flat bone portion.

6. A device as claimed in claim 5 characterized in that the gripping member comprises two opposing parts (76) at least one of which has a recess (77) for receiving the bone portion with an amount of clearance.

7. A device as claimed in claim 5 characterized in that the severing ridge (4) has generally the same shape as the remaining bone portion and in that the or each gripping member (7) is displaceable with respect to the severing element (2).

8. A device as claimed in claims 5 to 7 characterized in that two or more gripping members (7) are assembled on a movable carrier (8) to form a processing group, which has a control for consecutive manipulations.

9. A device as claimed in any one of the preceding claims, characterized in that the severing ridge (4) has a specularly symmetrical shape.

10. A device as claimed in claim 1, characterized in that inside said severing ridge (4) and said pressing surface of said one (2) and/or counter element (3), respectively, a cavity is provided for, and the cavity is filled with a deformable mass.

11. A device as claimed in claim 10, characterized in that said mass is formed by one or more layers of elastic material, for example, rubber.

12. A device as claimed in claims 10 and 11 characterized in that one or more layers are perforated.

13. A device as claimed in claim 1, characterized in that the element and/or the counter-element has a cavity therein for receiving a bone portion and in that in the bottom of the or each cavity is arranged one or more members adapted to be displaced in the direction of movement of the elements against an elastic force.

14. A device as claimed in claim 13, characterized in that said members are formed by a plurality of pins.

15. A device as claimed in claim 13, characterized in that said members have the shape of stamps.

16. A device as claimed in claims 13 to 16 characterized in that said members are supported by a diaphragm of a chamber filled with a high pressure fluid.

17. A device as claimed in any one of the preceding claims 10 to 16 characterized in that the or each cavity has a stepped inner wall.

18. A device as claimed in any one of the preceding claims 10 to 17 characterized in that one or more cutting members (73) each having a cutting edge (72) is(are) included in the deformable mass (57, 58).

19. A device as claimed in claim 18, characterized in that the cutting member (73) has the shape of a strip having a cutting edge (72) and being fastened on the side remote from the cutting edge (72) to a supporting plate (74) arranged between the elastic layers (57, 58).

20. A device as claimed in claim 18 or 19, characterized in that the cutting edge (72) has a curved shape, viewed in the direction of cutting and/or at right angles thereto.

21. A device as claimed in any one of the preceding claims, characterized in that a centering means (80) is provided at opposite sides of the severing- and counter-element (51, 52), said centering means (80) is adapted to be moved into a first position, wherein means are protruding in the space between the severing- and counter-element, and vice versa into a second position, wherein said means are retracted so clearing said space.

22. A device as claimed in claim 21, characterized in that said centering means are formed like movable arms (81), arranged in two groups opposite to each other.

23. A device as claimed in claim 21 and 22, characterized in that in said first position of said opposite arms (81) the end faces thereof are positioned under a certain angle (α) to each other.

24. A device as claimed in claim 21—23, characterized in that the movement of said arms (81) from said first position to said second position is controlled by the approaching movement of the severing- and counter-element (51, 52).

25. A method for boning pieces of meat, for example, shoulder or rib pieces, legs of poultry and the like, utilizing a press comprising a first element having a pressing surface and a second element having a second pressing surface, both surfaces substantially matching the shape of the bone in the piece of meat, characterized in that said piece of meat is placed such that its bone is located within the area of said pressing surfaces, the first and second elements are moved to each other and the meat is severed along the border area of said pressing surfaces by applying a higher pressing force on that border area than the pressing force effectuated by said pressing surfaces.

**Patentansprüche**

1. Vorrichtung zum Entbeinen von Fleischstükken, z.b. Schulter- oder Rippenstücken, Geflügelschenkeln oder dergleichen, mit einem Rahmen (1), einem ersten Element (2) mit einer Preßlfäche (100) und einem Gegenelement (3) mit einer gegenüberliegenden Preßfläche (101), einer Antriebseinrichtung (2') zum Bewegen des ersten Elementes (2) und des Gegenelementes (3) aufeinanderzu und umgekehrt, und einer Trennmitteleinrichtung zum Trennen vom Fleisch, Sehnen oder dergleichen von dem Knochen, dadurch gekennzeichnet, daß die Preßfläche (100) des ersten Elements (2) von einem durchgehenden und vorstehenden Trenngrat (4) begrenzt wird, der als die Trenneinrichtung wirkt und mit der durchgehenden Trennfläche (20) des Gegenelements (3) zusammenwirkt, wobei der Trenngrat (4) im wesentlichen der Knochenform des betreffenden Fleischstückes angepaßt ist.

2. Vorrichtung nach Anspruch 1, dadurch gekennzeichnet, daß das Gegenelement (3) aus einem unter Einwirkung des Trenngrats permanent verformbaren oder duktilen Werkstoff, wie z.B. rostfreiem Stahl, besteht.

3. Vorrichtung nach Anspruch 1 und 2, dadurch gekennzeichnet, daß das Genenelement als austauschbare Platte (20) ausgebildet ist.

4. Vorrichung nach den Ansprüchen 1 bis 3, dadurch gekennzeichnet, daß mindestens eines der Elemente eine Ausnehmung (5) aufweist, deren Umrißlinie (19) in Bewegungsrichtung gesehen im Abstand zu dem Trenngrat (4) innerhalb derselben verläuft und deren Rauminhalt im wesentlichen dem des Knochenteils entspricht.

5. Vorrichtung zum Verarbeiten von Fleischstücken mit relativ flachen Knochenteilen, wie Schulterstücken, nach einem der vorangehenden Ansprüche 1 bis 4, dadurch gekennzeichnet, daß die Vorrichtung einen Teil oder mehrere Teile (7) zum Ergreifen des flachen Knochenteils aufweist.

6. Vorrichtung nach Anspruch 5, dadurch gekennzeichnet, daß der Greiferteil zwei einander gegenüberliegende Teile (76) aufweist, von denen mindestens einer eine Ausnehmung (77) zum Aufnehmen des Knochenteils mit gewissem Spiel aufweist.

7. Vorrichtung nach Anspruch 5, dadurch gekennzeichnet, daß der Trenngrat (4) im wesentlichen die gleiche Form wie der verbleibende Knochenteil aufweist und daß der oder jeder Greiferteil (7) reativ zu dem Trennelement (2) verlagerbar ist.

8. Vorrichtung nach den Ansprüchen 5 bis 7, dadurch gekennzeichnet, daß zwei oder mehr Greiferteile (7) an einem bewegbaren Tragteil (9) zu einer Bearbeitungsgruppe zusammengefaßt sind, welche eine Steuerung für aufeinanderfolgende Manipulationen aufweist.

9. Vorrichtung nach einem der vorangehenden Ansprüche, dadurch gekennzeichnet, daß der Trenngrat (4) eine spiegelsymmetrische Form hat.

10. Vorrichtung nach Anspruch 1, dadurch gekennzeichnet, daß sich innerhalb des Trenngrates und/oder der Preßfläche des ersten Elements (2) bzw. des Gegenelements (3) ein Hohlraum erstreckt, der von einer nachgiebigen Masse ausgefüllt ist.

11. Vorrichtung nach Anspruch 10, dadurch gekennzeichnet, daß die Masse aus einer oder mehreren Lagen elastischen Materials, wie z.B. Gummi, besteht.

12. Vorrichtung nach den Ansprüchen 10 und 11, dadurch gekennzeichnet, daß eine oder mehrere Lagen perforiert sind.

13. Vorrichtung nach Anspruch 1, dadurch gekennzeichnet, daß in dem ersten Element und/oder dem Gegenelement ein Hohlraum zum Aufnehmen eines Knochenteils ausgebildet ist und am Boden des Hohlraumes bzw. der Hohlräume ein Teil oder mehrere Teile angeordnet sind, die in Bewegungsrichtung gegen eine von elastischen Mitteln erzeugte Kraft verlagerbar sind.

14. Vorrichtung nach Anspruch 13, dadurch gekennzeichnet, daß die verlagerbaren Teile als eine Mehrzahl von Stiften ausgebildet sind.

15. Vorrichtung nach Anspruch 13, dadurch gekennzeichnet, daß die verlagerbaren Teile die Gestalt von Stempeln aufweisen.

16. Vorrichtung nach den Ansprüchen 13 bis 16, dadurch gekennzeichnet, daß die verlagerbaren Teile von einer Federplatte einer Kammer getragen werden, die mit einem Hochdruckmedium gefüllt ist.

17. Vorrichtung nach einem der vorangehenden Ansprüche 10 bis 16, dadurch gekennzeichnet, daß der Hohlraum bzw. die Hohlräume gestufte Wandflächen aufweisen.

18. Vorrichtung nach einem der vorangehenden Ansprüche 10 bis 17, dadurch gekennzeichnet, daß in der nachgiebigen Masse ein oder mehrere Schneidteile (73) jeweils mit welche einer Schneidkante (72) vorgesehen ist/sind.

19. Vorrichtung nach Anspruch 18, dadurch gekennzeichnet, daß der Schneidteil (73) bandförmig mit einer Schneidkante (72) ausgebildet ist und mit seiner der Schneidkante (72) abgewandten Seite an einer Trägerplatte (74) angebracht ist, die zwischen den elastischen Lagen (57, 58) angeordnet ist.

20. Vorrichtung nach Anspruch 18 oder 19, dadurch gekennzeichnet, daß die Schneidkante (72) eine in Schneidrichtung und/oder senkrecht dazu gesehen gebogene Form aufweist.

21. Vorrichtung nach einem der vorangehenden Ansprüche, dadurch gekennzeichnet, daß eine Zentriereinrichtung (80) an den einander gegenüberliegenden Seiten des Trennelementes und des Gegenelements (51 bzw. 52) ausgestaltet ist und in eine erste Position hineinbewegt werden kann, in der sie in den Zwischenraum zwischen dem Trenn- und Gegenelement hineinragt, und umgekehrt in eine zweite Position zurückgezogen werden kann, um besagten Zwischenraum freizugeben.

22. Vorrichtung nach Anspruch 21, dadurch gekennzeichnet, daß die Zentriereinrichtung aus bewegbaren Armen (81) ausgestaltet ist, die in zwei einander gegenüberliegenden Gruppen angeordnet sind.

23. Vorrichtung nach den Ansprüchen 21 und 22, dadurch gekennzeichnet, daß in der ersten Position der einander gegenüberliegenden Arme (81) deren Stirnflächen einen bestimmten Winkel (α) zueinander einnehmen.

24. Vorrichtung nach den Ansprüchen 21 bis 23, dadurch gekennzeichnet, daß die Bewegung der Arme (81) aus der ersten Postion in die zweite Position durch die Annäherungsbewegung des Trenn- und Gegenelements (51 bzw. 52) gesteuert wird.

25. Verfahren zum Entbeinen von Fleischstücken, z.B. Von Schulter- oder Rippenstücken, Geflügelbeinen oder dergleichen, unter Verwenden einer Presse mit einem ersten Element mit einer ersten Preßfläche und einem zweiten Element mit einer zweiten Preßfläche, wobei beide Preßflächen im wesentichen der Form des Knochens im dem Fleischstück angepaßt sind, dadurch gekennzeichnet, daß das Fleischstück derart plaziert wird, daß es sich mit seinem Knochen innerhalb Bereiches der Preßlächen befindet, das erste und zweite Element aufeinanderzubewegt werden und das Fleischstück entlang der Randzone der Preßflächen dadurch abgeschert wird, daß in der Randzone der Preßflächen eine höhere Scherkraft als in den übrigen Preßflächenbereichen aufgebracht wird.

## Revendications

1. Dispositif pour désosser des pièces de viande, par exemple, des épaules ou côtes, pattes de volailles ou équivalents, ledit dispositif comprenant un châssis (1), un premier élément (2) possédant une surface de pression (100) et un contre-élément (3) possédant une surface de pression opposée (101), des moyens moteurs (2') servant à rapprocher le premier élément (2) et le contre-élément (3) ou à les éloigner l'un de l'autre, et des moyens de séparation destinés à séparer la viande, les tendons et équivalents de l'os, caractérisé en ce que la surface de pression (100) dudit premier élément (2) est bordée d'une nervure de séparation continue et saillante (4) qui joue le rôle des moyens séparateurs, en coopération avec une surface de coupe continue (20) dudit contre-élément (3), tandis que ladite nervure de coupe (4) épouse sensiblement la forme de l'os contenu dans la pièce de viande.

2. Dispositif selon la revendication 1, caractérisé en ce que le contre-élément (20) est fait d'une matière, par exemple, d'acier inoxydable, qui peut subir une déformation permanente par rapport à la nervure de coupe, ou qui est ductile.

3. Dispositif selon les revendications 1 ou 2, caractérisé en ce que le contre-élément est réalisé sous la forme d'une pièce interchangeable (20).

4. Dispositif selon l'une des revendications 1 à 3, caractérisé en ce qu'au moins l'un desdits éléments présente un évidement (5) dont la ligne de contour (19), vue dans le sens du mouvement, s'étend à une certaine distance de la nervure de coupe (4) et à l'intérieur de cette nervure et dont le volume correspond sensiblement à celui de la portion d'os.

5. Dispositif pour traiter des pièces de viande comportant des portions d'os relativement plates, telles qu'une épaule, et selon l'une queloconque des revendications précédentes, caractérisé en ce qu'un ou plusieurs élément(s) de préhension (7) sont prévus pour prendre cette portion d'os plate.

6. Dispositif selon la revendication 5, caractérisé en ce que le moyen de préhension comprend deux parties opposées (76) dont au moins l'une présente un évidement (77) destiné à recevoir la portion d'os avec un certain jeu.

7. Dispositif selon la revendication 5, caractérisé en ce que la nervure de coupe (4) présente à peu près la même forme que la portion d'os restante et en ce que le ou chaque élément de préhension (7) peut se déplacer par rapport à l'élément de coupe (2).

8. Dispositif selon l'une des revendications 5 à 7, caractérisé en ce que deux ou plus de deux éléments de préhension (7) sont assemblés sur un chariot mobile (8) pour former un groupe de traitement que a une commande pour des manipulations consécutives.

9. Dispositif selon l'une quelconque des revendications précédentes, caractérisé en ce que la nervure de coupe (4) présente une forme symétrique.

10. Dispositif selon la revendication 1, caractérisé en ce qu'à l'intérieur de ladite nervure de coupe (4) et de ladite surface de pression dudit élément (2) et/ou du contre-élément (3) respectivement, il est prévu une cavité destinée à recevoir une masse déformable et que cette cavité est remplie de cette masse déformable.

11. Dispositif selon la revendication 10, caractérisé en ce que ladite masse est formée d'une ou plusieurs couche(s) de matière élastique, par exemple de caoutchouc.

12. Dispositif selon les revendications 10 ou 11, caractérisé en ce qu'une ou plusieurs couche(s) est ou sont perforée(s).

13. Dispositif selon la revendication 1, caractérisé en ce que l'élément et/ou le contre-élément possède(nt) intérieurement une cavite pour recevoir une portion d'os et en ce que, dans le fond de la cavité ou de chaque cavité est ou sont agencé(s) un ou plusieurs élément(s) adapté(s) pour étre déplacé(s) dans le sens du mouvement des éléments, à l'encontre d'une force élastique.

14. Dispositif selon la revendication 13, caractérisé en ce que lesdits éléments sont formés par une pluralité de tiges.

15. Dispositif selon la revendication 13, caractérisé en ce que lesdits éléments ont la forme de matrices.

16. Dispositif selon l'une des revendications 13 à 15, caractérisé en ce que lesdits éléments sont supportés par un diaphragme appartenant à une chambre remplie de fluide sous haute pression.

17. Dispositif selon l'une quelconque des revendications précédentes 10 à 16, caractérisé en ce que la ou chaque cavité présente une paroi intérieure échelonnée.

18. Dispositif selon l'une quelconque des revendications précédentes 10 à 17, caractérisé en ce qu'un ou plusieurs élément(s) coupant(s) (73) présentant chacun une arête tranchante (72) est ou sont inclu(s) dans la masse déformable (57, 58).

19. Dispositif selon la revendication 18, caractérisé en ce que l'organe tranchant (73) présente la forme d'une bande qui présente une arête tranchante (72) et est fixée sur son côté qui est à l'opposé de l'arête tranchante (72), à une plaque support (74) agencée entre les couches élastiques (57, 58).

20. Dispositif selon la revendication 18 ou 19, caractérisé en ce que l'arête tranchante (72) possède une forme incurvée, dans la direction de la coupe et/ou perpendiculairement à cette direction.

21. Disppositif selon l'une quelconque des revendications précédentes, caractérisé en ce qu'un moyen de centrage (80) est prévu sur les faces opposées de l'élément de coupe et du contre-élément (51, 52), ledit moyen de centrage (80) étant adapté pour pouvoir être amené à une première position, dans laquelle des moyens font saillie dans l'espace compris entre l'élément de coupe et le contre-élément ou, inversement, dans une deuxième position, dans laquelle lesdits moyens sont rétractés de façon à dégager ledit espace.

22. Dispositif selon la revendication 21, caractérisé en ce que les moyens de centrage présentent la forme de bras mobiles (81) agencées en deux groupes opposés mutuellement.

23. Dispositif selon les revendications 21 ou 22, caractérisé en ce que, dans ladite première position desdits bras opposés (81), les faces terminales de ces bras sont disposées en formant entre elles un certain angle ($\alpha$) l'un par rapport à l'autre.

24. Dispositif selon l'une des revendication 21 à 23, caractérisé en ce que le mouvement desdits bras (81) allant de ladite première position à ladite deuxième position est commandé par le mouvement de rapprochement de l'élément de coupe et du contre-élément (51, 52).

25. Procédé pour désosser des pièces de viande, par exemple, des épaules ou côtes, pattes de volailles et équivalents, utilisant une presse qui comprend un premier élément ayant une surface de pression et un deuxième élément ayant une deuxième surface de pression, les deux surfaces s'adaptant sensiblement à la forme de l'os contenu dans la pièce de viande, caractérisé en ce qu'on place ladite pièce de viande de telle manière que son os soit placé dans la zone desdites surfaces de pression, on rapproche le premier et le deuxième éléments l'une de l'autre et la viande est découpée le long de la région de bordure desdites surfaces de pression en l'appliquant sur cette zone de bordure une force de pression plus grande que la force de pression qui est exercée par lesdites surfaces de pression.

FIG.1

0 086 020

FIG. 4

FIG. 2

FIG.3

FIG. 5

FIG. 7

FIG.11

FIG.12

FIG.13

FIG.6

FIG.14

FIG.9

61
60'
61
60'
61

FIG.8

53

↑P₄
51
70
52
57
68
69
60
61
62

67
65  63 64 66

FIG.10

52
60

FIG.16

FIG.17

4

FIG.15